# EUROPEAN PATENT APPLICATION

(11) **EP 4 807 625 A1**
(43) Date of publication of application: **16.09.2026**
(21) Application number: 23961616.2
(22) Date of filing: 15.12.2023
(51) Int. Cl.: G06N 3/0475, G06N 3/098, G10L 17/22, G10L 25/30, G06F 16/332

(54) **ARTIFICIAL INTELLIGENCE DEVICE AND OPERATION METHOD THEREOF**

(71) Applicant: LG Electronics Inc., Yeongdeungpo-gu Seoul 07336 (KR)
(72) Inventor: SON, Myeong Ok, Seoul 06772 (KR); KIM, Hyun Seung, Seoul 06772 (KR)
(74) Representative: Schott, Jakob Valentin
(86) International application number: PCT/KR2023/020803
(87) International publication number: WO 2025/127215

(57) **Abstract**

An artificial intelligence (AI) device according to an embodiment of the present disclosure may include: a communication unit that communicates with an electronic device and at least one generative artificial intelligence (Artificial Intelligence, AI) server; and a processor that acquires an analysis result including an entity name on the basis of text data corresponding to a voice command uttered by a user through the electronic device, acquires latest information on the entity name from a document database, generates a prompt on the basis of the analysis result and the latest information and transmits the generated prompt to the generative AI server, receives a response result corresponding to the prompt from the generative AI server, and transmits the response result to the electronic device.

## Description

### Technical Field

The present disclosure relates to an artificial intelligence device, and more particularly, to an artificial intelligence device capable of providing a response result through a generative artificial intelligence model.

### Background Art

Digital TV services using wired or wireless communication networks are becoming widespread. Digital TV services can provide various services that could not be provided by conventional analog broadcast services.

For example, digital TV services such as IPTV (Internet Protocol Television) and smart TV services provide bidirectionality that allows users to dynamically select the type and viewing time of programs to watch. IPTV and smart TV services may also provide various additional services such as Internet search, home shopping, and online gaming based on such bidirectionality.

Recently, TVs have been providing voice recognition services through the analysis of voice commands uttered by users.

Conventional generative AI models of generative AI servers do not have the latest data, and there is a high probability that they provide erroneous information, rather than answers desired by users, based on past data or a large number of web documents.

In addition, conventional TVs have searched for information on entity names in a one-dimensional manner using TV content-oriented metadata. Therefore, when there is no metadata, there has been a problem of difficulty in finding information related to entity names.

### Disclosure

### Technical Problem

The present disclosure aims to provide the latest/linked content together by utilizing data from a knowledge document database containing the latest information, in order to overcome the limitation of insufficient latest information during large language model processing.

The present disclosure aims to provide various types of information related to entity names during large language model processing.

### Technical Solution

An artificial intelligence device according to an embodiment of the present disclosure includes: a communication unit that communicates with an electronic device and at least one generative artificial intelligence (Artificial Intelligence, AI) server; and a processor that acquires an analysis result including an entity name based on text data corresponding to a voice command uttered by a user through the electronic device, acquires latest information on the entity name from a document database, generates a prompt based on the analysis result and the latest information, transmits the generated prompt to the generative AI server, receives a response result corresponding to the prompt from the generative AI server, and transmits the response result to the electronic device.

An operation method of an artificial intelligence device according to an embodiment of the present disclosure includes: acquiring an analysis result including an entity name based on text data corresponding to a voice command uttered by a user through an electronic device; acquiring latest information on the entity name from a document database; generating a prompt based on the analysis result and the latest information; transmitting the generated prompt to a generative AI server; receiving a response result corresponding to the prompt from the generative AI server; and transmitting the response result to the electronic device.

### Advantageous Effects

According to an embodiment of the present disclosure, there is an effect of being able to provide information desired by users in a diverse and accurate manner by using a document DB and a category DB having the latest information. **Description of Drawings**
FIG. 1 is a block diagram illustrating a configuration of a display device according to an embodiment of the present disclosure.
FIG. 2 illustrates an artificial intelligence (Artificial Intelligence, AI) server according to an embodiment of the present disclosure.
FIG. 3 is a drawing for explaining a configuration of an artificial intelligence system according to an embodiment of the present disclosure.
FIG. 4 is a ladder diagram for explaining an operation method of an artificial intelligence system according to an embodiment of the present disclosure.
FIGs. 5A and 5B are drawings for explaining examples of providing linked content by utilizing the latest information for a voice command uttered by a user according to an embodiment of the present disclosure.
FIGs. 6A and 6B are drawings for explaining examples of providing linked content by utilizing the latest information for a voice command uttered by a user according to another embodiment of the present disclosure.
FIGs. 7A and 7B are drawings for explaining examples of providing linked content by utilizing the latest information for a voice command uttered by a user according to another embodiment of the present disclosure.

### Mode for Invention

Hereinafter, embodiments relating to the present disclosure will be described in detail with reference to the accompanying drawings. The suffixes "module" and "unit" for components used in the description below are assigned or mixed in consideration of easiness in writing the specification and do not have distinctive meanings or roles by themselves.

A display device according to an embodiment of the present disclosure is an intelligent display device that adds a computer-assisted function to, for example, a broadcast reception function, and while remaining faithful to the broadcast reception function, adds an Internet function or the like and may have a more convenient interface such as a manual input device, a touch screen, or a space remote control. In addition, with the support of wired or wireless Internet functions, it is possible to connect to the Internet and a computer, and perform functions such as email, web browsing, banking, or games. A standardized general-purpose OS may be used for these various functions.

Accordingly, the display device described in the present disclosure may perform various user-friendly functions, for example, since various applications may be freely added or deleted on a general-purpose OS kernel. More specifically, the display device may be, for example, a network TV, an HBBTV, a smart TV, an LED TV, an OLED TV, or the like and in some cases, may also be applied to a smartphone.

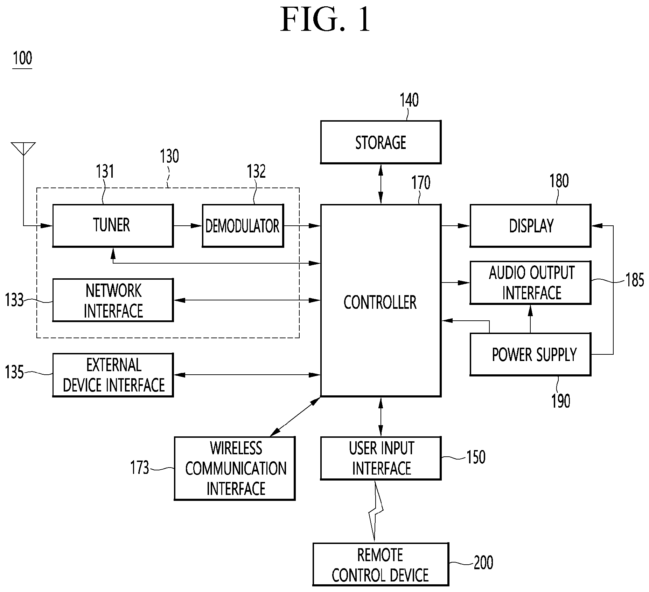

FIG. 1 is a block diagram illustrating a configuration of a display device according to an embodiment of the present disclosure.

Referring to FIG. 1, a display device 100 may include a broadcast reception part 130, an external device interface 135, a memory 140, a user input interface 150, a controller 170, a wireless communication interface 173, a display 180, a speaker 185, and a power supply circuit 190.

The broadcast reception part 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulator 132 may divide the received broadcast signals into image signals, audio signals, and broadcast program-related data signals, and may restore the divided image signals, audio signals, and data signals into an output available form.

The external device interface 135 may receive an application or an application list from an adjacent external device and deliver the application or the application list to the controller 170 or the memory 140.

The external device interface 135 may provide a connection path between the display device 100 and an external device. The external device interface 135 may receive at least one of an image or audio outputted from an external device that is wirelessly or wiredly connected to the display device 100 and deliver the received image or the audio to the controller 170. The external device interface 135 may include a plurality of external input terminals. The plurality of external input terminals may include an RGB terminal, at least one High Definition Multimedia Interface (HDMI) terminal, and a component terminal.

An image signal of an external device inputted through the external device interface 135 may be outputted through the display 180. A sound signal of an external device inputted through the external device interface 135 may be outputted through the speaker 185.

An external device connectable to the external device interface 135 may be one of a settop box, a Blu-ray player, a DVD player, a game console, a sound bar, a smartphone, a PC, a USB memory, and a home theater system but this is just exemplary.

The network interface 133 may provide an interface for connecting the display device 100 to a wired/wireless network including internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface 133 may access a predetermined webpage through an accessed network or another network linked to the accessed network. In other words, the network interface 133 may transmit or receive data to or from a corresponding server by accessing a predetermined webpage through the network.

The network interface 133 may receive content or data provided from a content provider or a network operator. In other words, the network interface 133 may receive content, such as movies, advertisements, games, VODs, and broadcast signals, which are provided from the content provider or the network operator, and information relating thereto through the network.

In addition, the network interface 133 may receive firmware update information and update files provided from the network operator, and may transmit data to the Internet or content provider or the network operator.

The network interface 133 may select and receive a desired application among applications open to the air, through network.

The memory 140 may store signal-processed image, voice, or data signals stored by a program in order for each signal processing and control in the controller 170.

In addition, the memory 140 may perform a function for temporarily storing image, voice, or data signals output from the external device interface 135 or the network interface 133, and may store information on a predetermined image through a channel memory function.

The memory 140 may store an application or an application list input from the external device interface 135 or the network interface 133.

The display device 100 may play content files (e.g., video files, still image files, music files, document files, application files, etc.) stored in the memory 140, and may provide the content files to a user.

The user input interface 150 may transmit signals input by a user to the controller 170, or may transmit signals from the controller 170 to a user. For example, the user input interface 150 may receive or process control signals such as power on/off, channel selection, and screen setting from the remote control device 200 or transmit control signals from the controller 170 to the remote control device 200 according to various communication methods such as Bluetooth, Ultra Wideband (UWB), ZigBee, Radio Frequency (RF), and IR communication methods.

In addition, the user input interface 150 may transmit, to the controller 170, control signals input from local keys (not illustrated) such as a power key, a channel key, a volume key, and a setting key.

Image signals that are image-processed by the controller 170 may be input to the display 180 and displayed as images corresponding to the image signals. In addition, image signals that are image-processed by the controller 170 may be input to an external output device through the external device interface 135.

Voice signals processed by the controller 170 may be output to the speaker 185. In addition, voice signals processed by the controller 170 may be input to the external output device through the external device interface 135.

Additionally, the controller 170 may control overall operations of the display device 100.

In addition, the controller 170 may control the display device 100 by a user command or an internal program input through the user input interface 150, and may access the network to download a desired application or application list into the display device 100.

The controller 170 may output channel information selected by a user together with the processed image or voice signals through the display 180 or the speaker 185.

In addition, the controller 170 may output image signals or voice signals of an external device such as a camera or a camcorder, which are input through the external device interface 135, through the display 180 or the speaker 185, according to an external device image playback command received through the user input interface 150.

Moreover, the controller 170 may control the display 180 to display images, and may control the display 180 to display broadcast images input through the tuner 131, external input images input through the external device interface 135, images input through the network interface 133, or images stored in the memory 140. In this case, an image displayed on the display 180 may be a still image or video and also may be a 2D image or a 3D image.

Additionally, the controller 170 may play content stored in the display device 100, received broadcast content, and external input content input from the outside, and the content may be in various formats such as broadcast images, external input images, audio files, still images, accessed web screens, and document files.

Moreover, the wireless communication interface 173 may perform wired or wireless communication with an external device. The wireless communication interface 173 may perform short-range communication with an external device. For this, the wireless communication interface 173 may support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies. The wireless communication interface 173 may support wireless communication between the display device 100 and a wireless communication system, between the display device 100 and another display device 100, or between networks including the display device 100 and another display device 100 (or an external server) through Wireless Area Networks. The wireless area networks may be Wireless Personal Area Networks.

Herein, the other display device 100 may be a mobile terminal such as a wearable device (for example, a smartwatch, a smart glass, a Head Mounted Display (HMD)), or a smartphone, which is capable of exchanging data (or inter-working) with the display device 100 according to the present disclosure. The wireless communication interface 173 may detect (or recognize) a wearable device capable of communication around the display device 100.

Furthermore, if the detected wearable device is a device authenticated to communicate with the display device 100 according to the present disclosure, the controller 170 may transmit at least part of data processed in the display device 100 to the wearable device through the wireless communication interface 173. Therefore, a user of the wearable device may use the data processed by the display device 100 through the wearable device.

The display 180 may convert image signals, data signals, OSD signals processed in the controller 170, or image signals, data signals received in the external device interface 135 into R, G, and B signals, respectively, to generate driving signals.

Furthermore, the display device 100 illustrated in FIG. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike FIG. 1, the display device 100 may receive images through the network interface 133 or the external device interface 135 and play them without including the tuner 131 and the demodulator 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to FIG. 1, an image processing device such as the separated set-top box, and a content playback device including the display 180 and the speaker 185.

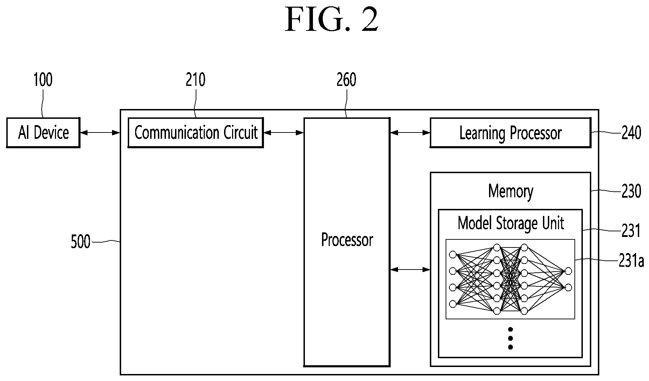

FIG. 2 illustrates an artificial intelligence (Artificial Intelligence, AI) server according to an embodiment of the present disclosure.

Referring to FIG. 2, an AI server 200 may refer to a device that uses a machine learning algorithm to train an artificial neural network or uses a trained artificial neural network.

The AI server 200 may be configured with a plurality of servers to perform distributed processing, and may be defined as a 5G network.

The AI server 200 may be included as a partial component of the AI device 100, and may perform at least part of AI processing together.

The AI server 200 may include a communication unit 210, a memory 230, a learning processor 240, and a processor 260.

The communication unit 210 may transmit and receive data to and from external devices such as the display device 100.

The memory 230 may include a model storage unit 231.

The model storage unit 231 may store a model (or an artificial neural network, 231a) that is being trained or has been trained through the learning processor 240.

The learning processor 240 may train the artificial neural network 231a using training data. The training model may be used while mounted on the AI server 200 of the artificial neural network, or may be used while mounted on an external device such as the display device 100.

The training model may be implemented in hardware, software, or a combination of hardware and software. When part or all of the training model is implemented in software, one or more instructions constituting the training model may be stored in the memory 230.

The processor 260 may infer a result value for new input data using the training model, and may generate a response or control command based on the inferred result value.

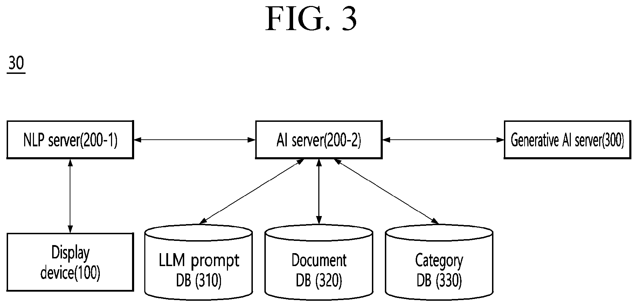

FIG. 3 is a drawing for explaining a configuration of an artificial intelligence system according to an embodiment of the present disclosure.

The artificial intelligence system 30 may include a display device 100, a Natural Language Processing (NLP) server 200-1, an AI server 200-2, and a generative AI server 300.

Each of the NLP server 200-1 and the AI server 200-2 may include all components of the AI server 200 illustrated in FIG. 2.

The AI server 200-2 may be referred to as an AI device.

The display device 100 may acquire a voice command uttered by a user.

The display device 100 may transmit voice data corresponding to the voice command to the NLP server 200-1.

The NLP server 200-1 may acquire an analysis result of the voice command based on the received voice data.

The NLP server 200-1 may determine whether a response to the analysis result is possible based on the analysis result of the voice command.

When the NLP server 200-1 determines that a response to the analysis result is impossible, it may transmit text data corresponding to the voice command to the AI server 200-2.

The AI server 200-2 may acquire a user's intent type and domain based on the received text data.

The AI server 200-2 may determine whether latest information on the acquired entity name exists.

When the AI server 200-2 determines that latest information on the entity name exists, it may acquire a plurality of category items.

The AI server 200-2 may generate a prompt based on the latest information on the entity name, the user's intent, the entity name, the domain, and a plurality of category items, and may transmit the generated prompt to the generative AI server 300.

The NLP server 200-1 and the AI server 200-2 may be configured as a single server. The AI server 200-2 may perform all functions of the NLP server 200-1.

The generative AI server 300 may generate a first response result based on the received prompt, and may transmit the generated first response result to the AI server 200-2.

The AI server 200-2 may generate a second response result based on the first response result received from the generative AI server 300, and may transmit the generated second response result to the NLP server 200-1.

The NLP server 200-1 may transmit the received second response result to the display device 100.

The display device 100 may output the received second response result.

The artificial intelligence system 30 may further include an LLM (Large Language Model) prompt DB 310, a document DB 320, and a category DB 330.

The LLM prompt DB 310 may include a plurality of prompt instructions. Each of the plurality of prompt instructions may be an instruction matched to at least one of an entity name, a user's intent type, and a domain.

The document DB 320 may be a database having the latest information on persons or content. Information stored in the document DB 320 may be periodically updated.

The document DB 320 may be a web site server that provides knowledge documents.

The category DB 330 may pre-store a plurality of category items matched to the user's intent type and domain.

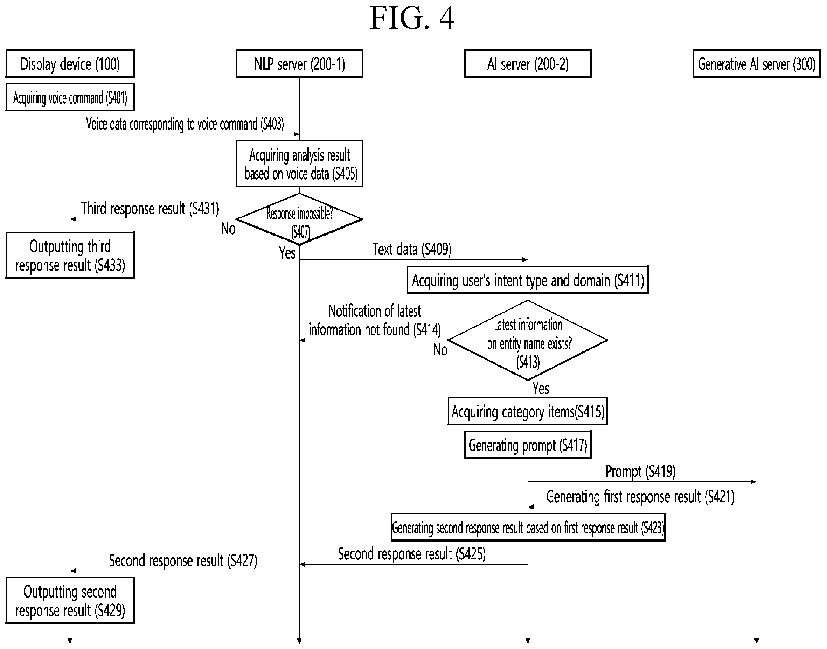

FIG. 4 is a ladder diagram for explaining an operation method of an artificial intelligence system according to an embodiment of the present disclosure.

Each of the NLP server 200-1 and the AI server 200-2 may include all components of the AI server 200 illustrated in FIG. 2.

**The controller 170 of the display device 100 may acquire a voice command (S401).**

In an embodiment, the controller 170 may receive a voice command uttered by a user through a microphone (not illustrated).

The controller 170 may receive a voice command from the remote control device 200. The remote control device 200 may receive a voice command uttered by a user and transmit the voice command to the display device 100.

**The controller 170 of the display device 100 may transmit voice data corresponding to the voice command to the NLP server 200-1 through the network interface 133 (S403).**

**The processor 260 of the NLP server 200-1 may acquire an analysis result of the voice command based on the received voice data (S405).**

In an embodiment, the processor 260 may convert voice data into text data using a Speech To Text (STT) engine stored in the memory 230.

In another embodiment, the processor 260 may transmit the voice data to an STT server, and receive text data converted by the STT server.

The processor 260 may acquire an analysis result of the text data using a Natural Language Processing (NLP) engine.

The analysis result may include an entity name. In an embodiment, the entity name may be one of the name of a person, the name of an object, or the name of content.

**The processor 260 of the NLP server 200-1 may determine whether a response to the analysis result is possible based on the analysis result of the voice command (S407).**

In an embodiment, the processor 260 may determine that a response is possible when a search result for the analysis result can be provided, and may determine that a response is impossible when a search result for the analysis result cannot be provided.

**When the NLP server 200-1 determines that a response to the analysis result is impossible, it may transmit text data corresponding to the voice command to the AI server 200-2 (S409).**

The NLP server 200-1 may transmit the text data and the analysis result together to the AI server 200-2. The analysis result may include an entity name included in the text data.

**The processor 260 of the AI server 200-2 may acquire the user's intent type and domain based on the received text data (S411).**

In an embodiment, the user's intent may be one of content search or question response. That is, the user's intent type may be one of a search type for content search or a question response type for receiving a response to a question.

In an embodiment, the domain may be a genre or field related to the entity name, or a genre related to content. For example, when the entity name is the name of a sports player, the domain may be sports. As another example, when the entity name is the title of a movie, the domain may be movie.

That is, the domain may represent one of the genres or types of content.

**The processor 260 of the AI server 200-2 may determine whether latest information on the acquired entity name exists (S413).**

The processor 260 may determine whether latest information on the entity name exists in the document DB 320. The processor 260 may query the document DB 320 as to whether latest information on the entity name exists, and when latest information exists, may receive the latest information from the document DB 320.

The document DB 320 may be a web site server that stores the latest knowledge.

**When the processor 260 of the AI server 200-2 determines that latest information on the entity name exists, it may acquire a plurality of category items (S415).**

The processor 260 may acquire a plurality of category items for the domain of the entity name.

As one example, when the entity name is the name of a person and the domain is sports, the plurality of category items may include the entity name's current team, past team, popular game, and latest game.

As another example, when the entity name is the name of a singer and the domain is music, the plurality of category items may include the latest song, popular song, and album name of the entity name.

The processor 260 may acquire a plurality of category items from the category DB 330. The processor 260 may transmit the entity name and domain to the category DB 330 through the communication unit 210, and may receive a plurality of category items from the category DB 330.

**The processor 260 of the AI server 200-2 may generate a prompt based on the latest information on the entity name, the user's intent, the entity name, the domain, and the plurality of category items (S417), and may transmit the generated prompt to the generative AI server 300 (S419).**

The processor 260 may combine the latest information on the entity name, the user's intent type, the entity name, the domain, and the plurality of category items to generate a prompt for a search command.

As one example, the prompt may be a command to provide a response matching the user's intent by using the entity name, the domain, the plurality of category items, and the latest information on the entity name.

The prompt may be a text command input to a generative AI model.

The processor 260 may generate a prompt based on the prompt instruction extracted from the LLM prompt DB 310, the latest information on the entity name extracted from the document DB 320, and the plurality of category items extracted from the category DB 330.

**The generative AI server 300 may generate a first response result based on the received prompt (S421), and may transmit the generated first response result to the AI server 200-2.**

The generative AI server 300 may include a generative AI model.

The generative AI model may be a model that uses deep learning or machine learning to generate a response as output to a prompt.

The generative AI model may be a natural language generative AI model that outputs natural language.

The natural language generative AI model may generate a first response result in response to the received prompt.

The natural language generative AI model may be a model trained using a deep learning architecture such as a recurrent neural network (RNN) and a transform model using an attention mechanism through large-scale text data.

Data for training the natural language generative AI model may be collected from the web or various text sources.

The natural language generative AI model may take the received prompt as input and generate one or more sentences including the content.

The generative AI server 300 may acquire one or more generated sentences as a first response result, and may transmit the acquired first response result to the AI server 200-2.

**The processor 260 of the AI server 200-2 may generate a second response result based on the first response result received from the generative AI server 300 (S423), and may transmit the generated second response result to the NLP server 200-1 (S425).**

The processor 260 may acquire a second response result including content information related to the first response result based on the first response result.

The processor 260 may request content information corresponding to each of the plurality of category items included in the first response result from an external server, and may receive the content information from the external server. The external server may be one of a web server and a streaming content providing server, but this is merely an example.

The content information may include at least one of a content name, an access address, a thumbnail image, and a video corresponding to each of the plurality of category items.

In an embodiment, the processor 260 of the AI server 200-2 may directly transmit the second response result to the display device 100 through the communication unit 210.

**The NLP server 200-1 may transmit the received second response result to the display device 100 (S427).**

**The display device 100 may output the received second response result (S429).**

The controller 170 of the display device 100 may display the second response result on the display 180. The display device 100 may display content matching each category item in the form of a user interface (User Interface, UI).

**Meanwhile, when the NLP server 200-1 determines that a response is possible based on the analysis result of the voice data, it may acquire a third response result, and may transmit the acquired third response result to the display device 100 (S431).**

The third response result may be a result that the NLP server 200-1 can provide based on the analysis result of the voice command uttered by the user. The third response result may include information on the function control of the display device 100.

**The display device 100 may output the received third response result (S433).**

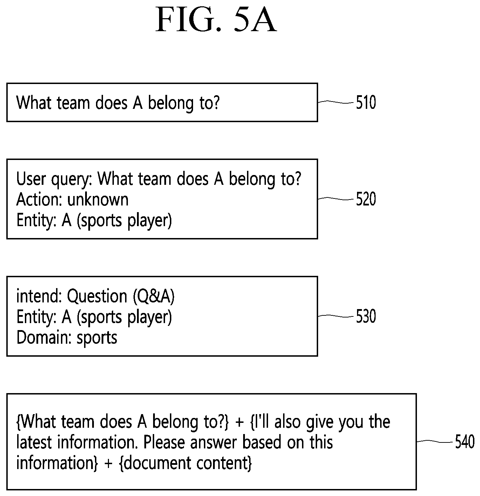

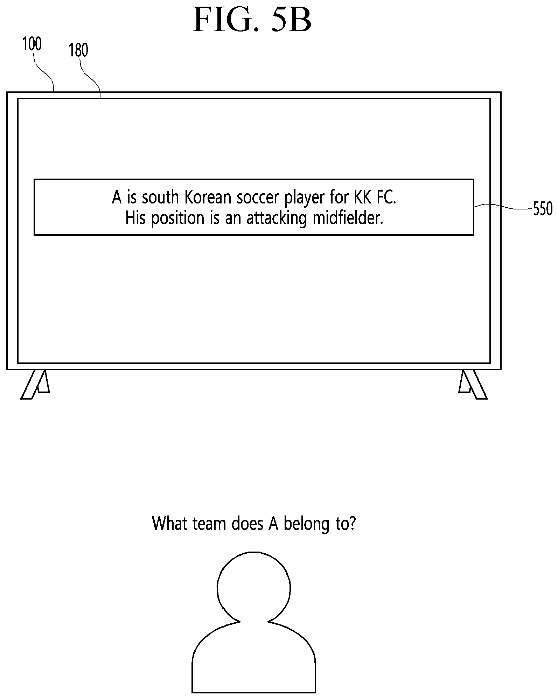

FIGs. 5A and 5B are drawings for explaining examples of providing linked content by utilizing the latest information for a voice command uttered by a user according to an embodiment of the present disclosure.

In particular, FIGs. 5A and 5B are drawings for explaining an example of providing a response result regarding querying the team to which the sports player James belongs.

In FIGs. 5A and 5B, the user utters a voice command 510 of <What team does James belong to>.

The display device 100 may transmit voice data corresponding to the voice command 510 uttered by the user to the NLP server 200-1.

The NLP server 200-1 may convert voice data into text data using a voice text conversion engine, and may acquire an analysis result 520 of the converted text data using a natural language processing engine.

In an embodiment, the analysis result 520 may include a user query, an action (unknown), and an entity name (James).

The NLP server 200-1 may generate an analysis result 520 including an action (unknown) indicating that there is no response to the query about the team to which James belongs because there is no response to the analysis based on the text data.

However, the NLP server 200-1 may transmit the text data corresponding to the voice command and the entity name (James) to the AI server 200-2.

The AI server 200-2 may acquire an additional analysis result 530 including the user's intent type and the domain of the entity name based on the text data and the entity name (James).

The AI server 200-2 may determine whether the user's intent type is a search type (or content search type) or a question response type based on the intent analysis of the text data.

The AI server 200-2 may analyze the user's intent type through discourse analysis. The discourse analysis may be a process of analyzing the intent of the text data by considering the context and meaning of the text data.

In FIG. 5A, the user's intent type may be a question response type, and the domain of the entity name may be sports.

The AI server 200-2 may acquire the latest information on the entity name (James) through the document DB 320. The AI server 200-2 may request the latest information on the entity name (James) from the document DB 320, and may receive the latest information on the entity name (James) from the document DB 320.

The AI server 200-2 may receive a prompt instruction from the LLM prompt DB 310.

When the AI server 200-2 determines that the latest information on the entity name (James) exists, it may request a prompt instruction matching the intent type and domain from the LLM prompt DB 310, and may receive the prompt instruction from the LLM prompt DB 310.

The prompt instruction may be an instruction extracted from the LLM prompt DB 310. Here, the prompt instruction may be <I'll also give you the latest information. Please answer based on this information>.

<document content> may include the latest information on the entity name (James) extracted from the document DB 320.

The AI server 200-2 may generate a prompt 540 combining the text data corresponding to the voice command uttered by the user, the prompt instruction, and the latest information on the entity name (James).

The prompt 540 may include text data <user query> corresponding to the voice command uttered by the user, a prompt instruction <command word>, and the latest information <document content> on the entity name (James).

The AI server 200-2 may transmit the prompt 540 to the generative AI server 300, and may receive a response result 550 corresponding to the prompt 540 from the generative AI server 300.

The response result 550 may include the latest information on the team to which the player James belongs.

The AI server 200-2 may transmit the response result 550 to the NLP server 200-1, or directly transmit the response result 550 to the display device 100.

Referring to FIG. 5B, the display device 100 may display the response result 550 on the display 180. The response result 550 may include information on the team to which the player James belongs, which is an answer to the voice command 510 uttered by the user.

The generative AI model of the conventional generative AI server 300 does not have the latest data, and there is a high probability that it provides erroneous information, rather than answers desired by users, based on past data or a large number of web documents.

According to an embodiment of the present disclosure, there is an effect of being able to accurately provide information desired by users by using the document DB 320 having the latest information to overcome such limitation.

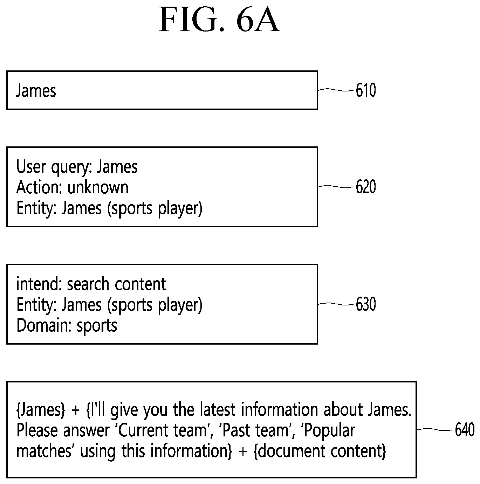

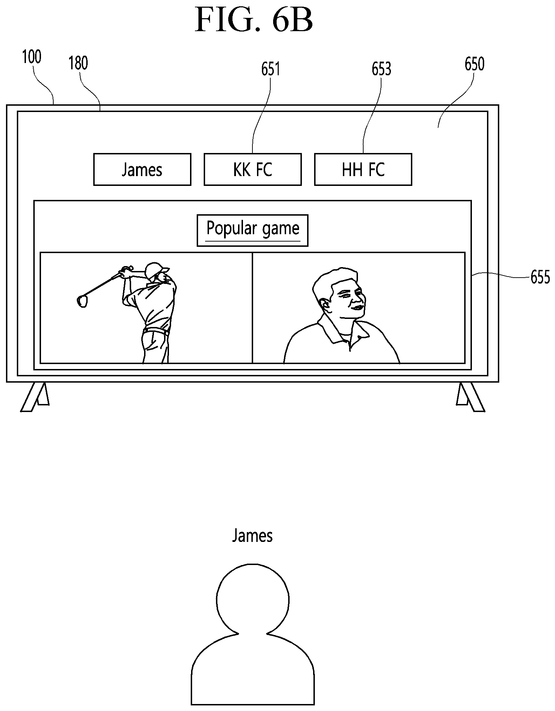

FIGs. 6A and 6B are drawings for explaining examples of providing linked content by utilizing the latest information for a voice command uttered by a user according to another embodiment of the present disclosure.

In particular, FIGs. 6A and 6B are drawings for explaining an example of providing a response result regarding a user uttering a sports player <James>.

In FIGs. 6A and 6B, the user utters a voice command 610 of <James>.

The display device 100 may transmit voice data corresponding to the voice command 610 uttered by the user to the NLP server 200-1.

The NLP server 200-1 may convert voice data into text data using a voice text conversion engine, and may acquire an analysis result 620 of the converted text data using a natural language processing engine.

In an embodiment, the analysis result 620 may include a user query, an action (unknown), and an entity name (James).

The NLP server 200-1 may generate an analysis result 620 including an action (unknown) indicating that there is no response to the analysis based on the text data because there is no action definition for the sports player James.

However, the NLP server 200-1 may transmit the entity name (James) to the AI server 200-2.

The AI server 200-2 may acquire an additional analysis result 630 including the user's intent type and the domain of the entity name based on the entity name (James).

The AI server 200-2 may determine whether the user's intent type is a search type or a question response type based on the intent analysis of the text data.

The AI server 200-2 may analyze the user's intent type through discourse analysis. The discourse analysis may be a process of analyzing the intent of the text data by considering the context and meaning of the text data.

The AI server 200-2 may extract the domain for the entity name from an entity name DB (not illustrated) including the entity name and the domain matched to the entity name.

In FIG. 6A, the user's intent type may be a search type, and the domain of the entity name may be sports.

The AI server 200-2 may acquire the latest information on the entity name (James) through the document DB 320. The AI server 200-2 may request the latest information on the entity name (James) from the document DB 320, and may receive the latest information on the entity name (James) from the document DB 320.

The AI server 200-2 may transmit information on the intent type and domain to the category DB 330, and may receive a plurality of category items matched to the intent type and domain from the category DB 330.

The category DB 330 may pre-store a plurality of category items matched to the intent type and domain. The plurality of category items may include a current team item, a past team item, and a popular game item.

The AI server 200-2 may receive a prompt instruction from the LLM prompt DB 310.

When the AI server 200-2 determines that the latest information on the entity name (James) exists, it may request a prompt instruction matching the intent type and domain from the LLM prompt DB 310, and may receive the prompt instruction from the LLM prompt DB 310.

The prompt instruction may be an instruction extracted from the LLM prompt DB 310. Here, the prompt instruction may be <I'll also give you + {entity name} + sports play's information. Please answer {current team, past team, popular game} using this information + {document content}>.

<document content> may represent the latest information on the entity name (James) extracted from the document DB 320.

The AI server 200-2 may generate a prompt 640 combining the prompt instruction, the entity name (James), the plurality of category items, and the latest information.

The AI server 200-2 may transmit the prompt 640 to the generative AI server 300, and may receive a response result 650 corresponding to the prompt 640 from the generative AI server 300.

The generative AI server 300 may acquire a response result 650 corresponding to the prompt 640 using a generative AI model, and may transmit the acquired response result 650 to the AI server 200-2.

The response result 650 may include the latest information on the player James.

The AI server 200-2 may transmit the response result 650 to the NLP server 200-1, or directly transmit the response result 650 to the display device 100.

Referring to FIG. 6B, the display device 100 may display the response result 650 on the display 180. The response result 650 may include information on the team to which the player James belongs, which is an answer to the voice command 710 uttered by the user.

The response result 650 may include the current team name 651, past team name 653, and popular game information 655 of the player James.

The popular game information 655 may include at least one of a video and an access address of popular games played by the player James in the current team or the past team.

The conventional display device 100 has searched for information on entity names in a one-dimensional manner using TV content-oriented metadata. Therefore, when there is no metadata, there has been a problem of difficulty in finding information related to entity names.

According to an embodiment of the present disclosure, there is an effect of being able to provide information desired by users in a diverse and accurate manner by using the document DB 320 and the category DB 330 having the latest information.

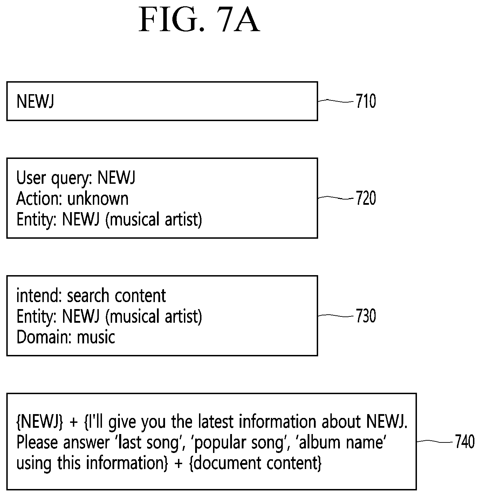

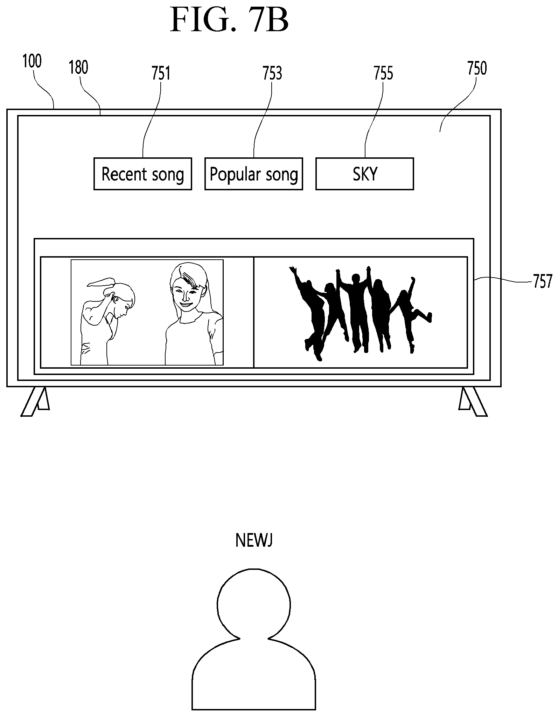

FIGs. 7A and 7B are drawings for explaining examples of providing linked content by utilizing the latest information for a voice command uttered by a user according to another embodiment of the present disclosure.

In particular, FIGs. 7A and 7B are drawings for explaining an example of providing a response result regarding a user uttering a sports player <NEWJ>.

In FIGs. 7A and 7B, the user utters a voice command 710 of <NEWJ>.

The display device 100 may transmit voice data corresponding to the voice command 710 uttered by the user to the NLP server 200-1.

The NLP server 200-1 may convert voice data into text data using a voice text conversion engine, and may acquire an analysis result 720 of the converted text data using a natural language processing engine.

In an embodiment, the analysis result 720 may include a user query, an action (unknown), and an entity name (NEWJ).

The NLP server 200-1 may generate an analysis result 720 including an action (unknown) indicating that there is no response to the analysis based on the text data because there is no action definition for the singer NEWJ.

However, the NLP server 200-1 may transmit the entity name (NEWJ) to the AI server 200-2.

The AI server 200-2 may acquire an additional analysis result 730 including the user's intent type and the domain of the entity name based on the entity name (NEWJ).

The AI server 200-2 may determine whether the user's intent type is a search type or a question response type based on the intent analysis of the text data.

The AI server 200-2 may analyze the user's intent type through discourse analysis. The discourse analysis may be a process of analyzing the intent of the text data by considering the context and meaning of the text data.

The AI server 200-2 may extract the domain for the entity name from an entity name DB (not illustrated) including the entity name and the domain matched to the entity name.

In FIG. 7A, the user's intent type may be a search type, and the domain of the entity name may be music.

The AI server 200-2 may acquire the latest information on the entity name (NEWJ) through the document DB 320. The AI server 200-2 may request the latest information on the entity name (NEWJ) from the document DB 320, and may receive the latest information on the entity name (NEWJ) from the document DB 320.

The AI server 200-2 may transmit information on the intent type and domain to the category DB 330, and may receive a plurality of category items matched to the intent type and domain from the category DB 330. The plurality of category items may include a latest song item, a popular song item, and an album name item.

The category DB 330 may pre-store a plurality of category items matched to the intent type and domain.

The AI server 200-2 may receive a prompt instruction from the LLM prompt DB 310.

When the AI server 200-2 determines that the latest information on the entity name (NEWJ) exists, it may request a prompt instruction matching the intent type and domain from the LLM prompt DB 310, and may receive the prompt instruction from the LLM prompt DB 310.

The prompt instruction may be an instruction extracted from the LLM prompt DB 310. Here, the prompt instruction may be <I'll also give you + {entity name} + musical artist's information. Please answer {latest song, popular song, album name} using this information + {document content}>.
<document content> may represent the latest information on the entity name (NEWJ) extracted from the document DB 320.

The AI server 200-2 may generate a prompt 740 combining the prompt instruction, the entity name (NEWJ), the plurality of category items, and the latest information.

The AI server 200-2 may transmit the prompt 740 to the generative AI server 300, and may receive a response result 750 corresponding to the prompt 740 from the generative AI server 300.

The generative AI server 300 may acquire a response result 750 corresponding to the prompt 740 using a generative AI model, and may transmit the acquired response result 750 to the AI server 200-2.

The response result 750 may include the latest information on the singer NEWJ.

The AI server 200-2 may transmit the response result 750 to the NLP server 200-1, or directly transmit the response result 750 to the display device 100.

Referring to FIG. 7B, the display device 100 may display the response result 750 on the display 180. The response result 750 may include information on the team to which the singer NEWJ belongs, which is an answer to the voice command 710 uttered by the user.

The response result 750 may include the latest song tab 751, the popular song tab 753, and the album name tab 755 of the singer NEWJ.

The latest song tab 751 may be a tab for providing at least one of a video for playing the latest songs of the singer NEWJ and an access address.

When the latest song tab 751 is selected, the display device 100 may display the latest song information 757 including at least one of a video for playing the latest songs of the singer NEWJ and an access address.

The popular song tab 753 may be a tab for providing at least one of a video for playing the popular songs of the singer NEWJ and an access address.

The album name tab 755 may be a tab for providing at least one of a video for playing songs included in the corresponding album of the singer NEWJ and an access address.

The conventional display device 100 has searched for information on entity names in a one-dimensional manner using TV content-oriented metadata. Therefore, when there is no metadata, there has been a problem of difficulty in finding information related to entity names.

According to an embodiment of the present disclosure, there is an effect of being able to provide information desired by users in a diverse and accurate manner by using the document DB 320 and the category DB 330 having the latest information.

According to an embodiment of the present disclosure, the above-described method can be implemented as code that can be read by a processor on a medium in which a program is recorded. Examples of media that can be read by a processor include ROM, RAM, CD-ROM, magnetic tape, floppy disk, and optical data storage device.

The display device described above is not limited to the configurations and methods of the described embodiments, and all or part of the embodiments may be selectively combined to configure various modifications.

## Claims

1. An artificial intelligence device, comprising:
a communication unit configured to communicate with an electronic device and at least one generative artificial intelligence (Artificial Intelligence, AI) server; and
a processor configured to acquire an analysis result including an entity name based on text data corresponding to a voice command uttered by a user through the electronic device, acquire latest information on the entity name from a document database, generate a prompt based on the analysis result and the latest information, transmit the generated prompt to the generative AI server, receive a response result corresponding to the prompt from the generative AI server, and transmit the response result to the electronic device.

2. The artificial intelligence device of Claim 1,
wherein the analysis result includes a user's intent type and domain,
the intent type is one of a question response type or a search type, and
the domain represents one of a genre or field related to the entity name.

3. The artificial intelligence device of Claim 2, wherein the processor is configured to transmit the intent type and the domain to a prompt data base, receive a prompt instruction from the prompt data base, and generate the prompt based on the text data, the prompt instruction, and the latest information.

4. The artificial intelligence device of Claim 2, wherein the processor is configured to transmit the intent type and the domain to a prompt data base, receive a prompt instruction from the prompt data base, transmit the intent type and the domain to a category data base, further comprise a plurality of category items from the category data base, and generate the prompt based on the entity name, the prompt instruction, the plurality of category items, and the latest information.

5. The artificial intelligence device of Claim 4,
wherein the response result includes at least one of an access address and a video corresponding to each of the plurality of category items.

6. The artificial intelligence device of Claim 5,
wherein when the entity name is the name of a sports player and the domain is sports, the plurality of category items include a current team item, a past team item, and a popular game item of the sports player.

7. The artificial intelligence device of Claim 5,
wherein when the entity name is the name of a singer and the domain is music, the plurality of category items include a latest song item, a popular song item, and an album name item of the singer.

8. An operation method of an artificial intelligence device, comprising:
acquiring an analysis result including an entity name based on text data corresponding to a voice command uttered by a user through an electronic device;
acquiring latest information on the entity name from a document database;
generating a prompt based on the analysis result and the latest information;
transmitting the generated prompt to a generative AI server;
receiving a response result corresponding to the prompt from the generative AI server; and
transmitting the response result to the electronic device.

9. The operation method of an artificial intelligence device of Claim 1,
wherein the analysis result includes a user's intent type and domain,
the intent type is one of a question response type or a search type, and
the domain represents one of a genre or field related to the entity name.

10. The operation method of an artificial intelligence device of Claim 9,
wherein the processor is configured to transmit the intent type and the domain to a prompt data base, receive a prompt instruction from the prompt data base, and generate the prompt based on the text data, the prompt instruction, and the latest information.

11. The operation method of an artificial intelligence device of Claim 9,
wherein the processor is configured to transmit the intent type and the domain to a prompt data base, receive a prompt instruction from the prompt data base, transmit the intent type and the domain to a category data base, further comprise a plurality of category items from the category data base, and generate the prompt based on the entity name, the prompt instruction, the plurality of category items, and the latest information.

12. The operation method of an artificial intelligence device of Claim 11,
wherein the response result includes at least one of an access address and a video corresponding to each of the plurality of category items.

13. The operation method of an artificial intelligence device of Claim 12,
wherein when the entity name is the name of a sports player and the domain is sports, the plurality of category items include a current team item, a past team item, and a popular game item of the sports player.

14. The operation method of an artificial intelligence device of Claim 12,
wherein when the entity name is the name of a singer and the domain is music, the plurality of category items include a latest song item, a popular song item, and an album name item of the singer.
